# FASCICULE DE BREVET EUROPEEN

(11) **EP 0 650 821 B1**
(45) Date de publication et mention de la délivrance du brevet: **05.03.1997**
(21) Numéro de dépôt: 93870179.4
(22) Date de dépôt: 27.08.1993
(51) Int. Cl.: B29C 70/76, B29C 44/00, E04C 2/04

(54) **Procédé et dispositif pour la fabrication d'éléments de parement isolants**
Verfahren und Vorrichtung zur Herstellung von Isolierplatten
Procedure and device for the manufacture of an insulating panel

(43) Date de publication de la demande: 03.05.1995
(73) Titulaire: GEPAT S.A., B-4770 Schoppen/Amel (BE)
(72) Inventeur: Genten, Werner, B-4770 Amel (BE)
(74) Mandataire: Van Malderen, Michel

(56) Documents cités:
- EP-A- 0 509 977
- WO-A-84/02876
- WO-A-92/21512
- BE-A- 891 963
- FR-A- 2 079 391
- FR-A- 2 287 989
- US-A- 3 543 338
- US-A- 5 061 161

## Description

### Objet de l'invention

La présente invention est relative à la fabrication d'éléments de parement isolants d'angle et à un dispositif pour la fabrication de tels éléments.

L'invention s'étend également aux produits résultant de ce procédé.

### Arrière-plan technologique à la base de l'invention

Le secteur technique dont relève la présente invention est celui décrit dans les documents BE-A-891 963, sur lequel repose le préambule de la revendication 4, et EP-A1-0 509 977.

En vue de réaliser l'isolation de bâtiments, la Demanderesse a développé des éléments de parement constitués essentiellement de plaquettes décoratives de moellons ou de pierres de taille disposées de manière adéquate, conformément à une maçonnerie, dans un support moussé, les joints entre les différentes plaquettes étant constitués de sable lié par la matière synthétique moussée du support.

Ces éléments donnent totale satisfaction pour couvrir des zones planes d'un support.

Cependant, des difficultés se présentent aux coins, dans les baies de portes ou de fenêtres lorsque les extrémités de parement sont disposées en angle pour se rejoindre.

Actuellement, les éléments d'angle sont le plus souvent réalisés par collage de morceaux découpés en biais hors de panneaux standards. Ceci entraîne cependant des durées de fabrication non négligeables et des temps de pose relativement importants sur le chantier.

De plus, l'élément coin présentera de manière inattendue pour l'observateur un collage de deux demi-plaquettes, ce qui pourra entraîner des risques d'infiltration d'eau et éventuellement provoquer une rupture d'une plaquette.

Dans le document WO92/21512, sur lequel reposent le préambule de la revendication 1 et celui de la revendication 8, on décrit un procédé et un dispositif de fabrication d'éléments d'angle pour des panneaux préfabriqués du type susmentionné. Il s'agit en fait d'une technique comportant l'utilisation d'un moule en forme de V, constitué de deux pièces, et d'un contre-moule en forme de coin complémentaire.

De cette manière, on réalise un élément de parement d'angle moulé en une seule pièce.

Selon ce procédé, on pose dans le fond du moule selon une configuration adéquate des plaquettes d'angle préformées en équerre, de façon à adopter une configuration boutisse/carreau.

Ensuite, on remplit les espaces entre les plaquettes de sable et d'isocyanate en ménageant grâce à la forme du moule des creux dans lesquels viendront lors de la pose se placer des éléments de liaison entre plaques jointives.

Le contre-moule est ensuite introduit dans l'espace en V et une mousse rigide injectée par un orifice pratiqué dans le moule, est formée dans l'espace entre le moule en V et le contre-moule.

Cette technique est manifestement difficile à mettre en oeuvre et nécessite la réalisation d'un moule de structure compliquée.

De plus, les phénomènes propres au moussage de la matière devant former la couche de mousse rigide sont également difficilement contrôlables dans une telle configuration de moule. En extrémité du coin, on constate des défauts.

En effet, ce moule ne permet que la pose de plaquettes formant équerre dans le fond du moule. Aussi, les éléments de parement d'angle obtenus sont de petite taille et n'offrent qu'une surface restreinte pour la fixation sur un support.

De plus, la forme en V nécessite l'adjonction d'isocyanate au sable pour diminuer l'écoulement du sable qui, sous l'action de la gravité ne se répartit pas uniformément dans les espaces entre les plaquettes, ce qui entraîne une diminution de l'épaisseur de joint et une modification de la répartition de la mousse. Par conséquent, ce procédé utilisant un moule en V ne permet pas d'obtenir des éléments de parement d'angle avec des joints de sable qui soient suffisamment solides et qui présentent une épaisseur suffisamment grande pour permettre leur fixation aisée sur un support.

### Buts visés par la présente invention

La présente invention vise à développer un procédé et un dispositif du type mentionné pour la réalisation d'éléments de parement d'angle, de conception plus simple et évitant les inconvénients de l'état de la technique.

L'invention vise en particulier à réaliser des éléments de parement d'angle de grande taille et de qualité régulière et satisfaisante, sans collage et sans perte de temps aussi bien lors de la fabrication en usine que lors de la pose sur chantier.

L'invention vise en particulier à obtenir un élément de parement d'angle présentant des joints de sable d'épaisseur constante sur toute la surface de parement afin d'assurer une fixation solide des plaques de parement sur leur support.

La présente invention vise également à permettre, sans modification majeure des moules utilisés, de s'adapter à différentes exigences de la clientèle en matière de dimensions notamment.

### Principaux éléments caractéristiques de l'invention

La présente invention concerne un procédé pour la fabrication d'éléments de parement d'angle comportant des plaquettes d'angle, des plaquettes planes et/ou des vides aux dimensions des plaquettes afin de permettre la liaison avec des panneaux adjacents lors de la pose sur un chantier, lesdites plaquettes étant disposées dans un support moussé avec des espaces correspondant à des joints ordinaires constitués de sable lié par la matière du support moussé, ledit support moussé étant formé en deux étapes opératoires successives.

De préférence, le procédé selon l'invention est réalisé comme suit:
- on place, dans une première étape, au fond d'un moule essentiellement plan, des plaquettes et/ou des protubérances afin de former des vides aux dimensions des plaquettes,
- on remplit les interstices entre les plaquettes et/ou les protubérances de sable (quartz) sec calibré,
- on recouvre le moule d'une première moitié de couvercle comportant un coin ou une cale,
- on injecte la mousse dans le moule,
- on recouvre de la deuxième moitié de couvercle, ce couvercle étant disposé vers la face arrière des plaquettes d'angle de manière à permettre l'expansion de la mousse sur la face arrière des plaquettes et/ou des protubérances, en formant à l'aide du coin ou de la cale un biseau essentiellement selon la bissectrice des plaquettes d'angle,
- on démoule l'élément ainsi formé,
- on place ensuite selon une seconde étape du procédé, au fond d'un second moule, après l'avoir fait pivoter de 90° l'élément formé dans la première étape ainsi que des plaquettes planes et/ou des protubérances destinées à former des vides aux dimensions des plaquettes,
- on remplit les interstices entre les plaquettes et/ou les protubérances de sable (quartz) sec calibré,
- on injecte de la mousse dans le moule,
- on recouvre le moule d'un couvercle, de manière à permettre l'expansion de la mousse sur la face arrière des plaquettes et/ou des protubérances jusqu'au biseau déjà formé,
- on démoule l'élément de parement d'angle ainsi formé.

Selon une variante d'exécution, le procédé de l'invention est réalisé comme suit:
- on place, dans une première étape, au fond d'un moule essentiellement plan, des plaquettes et/ou des protubérances afin de former des vides aux dimensions des plaquettes,
- on remplit les interstices entre les plaquettes et/ou les protubérances de sable sec calibré,
- on recouvre le moule d'un couvercle comportant un coin ou une cale, ce couvercle étant disposé vers la face arrière des plaquettes de manière à permettre l'expansion de la mousse sur la face arrière desdites plaquettes et/ou des protubérances en formant à l'aide du coin ou de la cale, un biseau essentiellement selon la bissectrice des plaquettes d'angle,
- on injecte de la mousse par un orifice d'injection pratiqué dans la paroi dudit moule,
- on démoule l'élément formé,
- on place ensuite au fond d'un second moule, après l'avoir fait pivoter de 90°, l'élément ainsi formé ainsi que des plaques planes et/ou des protubérances,
- on remplit les interstices entre les plaquettes et/ou les protubérances de sable sec calibré,
- on recouvre le moule d'un couvercle,
- on injecte de la mousse dans le moule par un orifice d'injection pratiqué dans la paroi dudit moule de manière à permettre l'expansion de la mousse sur la face arrière des plaquettes et/ou des protubérances jusqu'au biseau formé,
- on démoule l'élément de parement d'angle ainsi formé.

La présente invention se rapporte également à un dispositif destiné à la mise en oeuvre du procédé de fabrication d'éléments de parement d'angle comportant au moins un moule essentiellement plan destiné à recevoir des plaquettes et/ou des protubérances afin de former des vides aux dimensions des plaquettes et la mousse destinée à réaliser le support moussé des éléments d'angle, ce moule étant muni d'un couvercle, de préférence en deux parties, qui comporte un coin ou une cale à son extrémité.

De préférence ce dispositif comprend un second moule destiné à recevoir l'élément formé dans le premier moule, ce moule étant muni d'un couvercle.

Avantageusement, le moule comporte des taquets prévus pour former des orifices de fixation dans les éléments de parement formés dans le dispositif de l'invention. De préférence, ce moule comporte également un orifice d'injection pour la mousse.

L'invention concerne également l'élément de parement d'angle formé selon le procédé de l'invention, comportant des plaquettes, réalisées de préférence à partir de briques, de moellons, de pierres de taille et/ou de substituts de ceux-ci, disposées à l'extérieur d'un support moussé avec des espaces correspondant à des joints ordinaires constitués de sable lié par la matière du support moussé, ledit support moussé comportant un biseau correspondant à la bissectrice de l'angle de la plaquette formant le coin d'angle de l'élément de parement.

De préférence, cet élément de parement d'angle comporte des orifices de fixation dans les espaces correspondants à des joints ordinaires.

L'élément de parement comporte également des vides aux dimensions des plaquettes afin de permettre la liaison avec des panneaux adjacents lors de la pose sur un chantier.

### Brève description des figures

Dans la figure 1, on a représenté dans une vue en élévation la forme du fond d'un premier moule dans lequel on réalise la première étape du procédé selon l'invention.

La figure 2 est une figure correspondante pour un deuxième moule destiné à la deuxième étape du procédé de l'invention.

La figure 3 est une vue schématique d'un moule servant à la première phase de formage de l'élément de parement d'angle et les figures 4 et 5 sont respectivement des vues en coupe selon A-A et B-B du moule de la figure 3.

La figure 6 est une vue schématique d'un second moule servant à la deuxième étape du procédé selon l'invention.

La figure 7 est une coupe selon C-C du moule représenté à la figure 6.

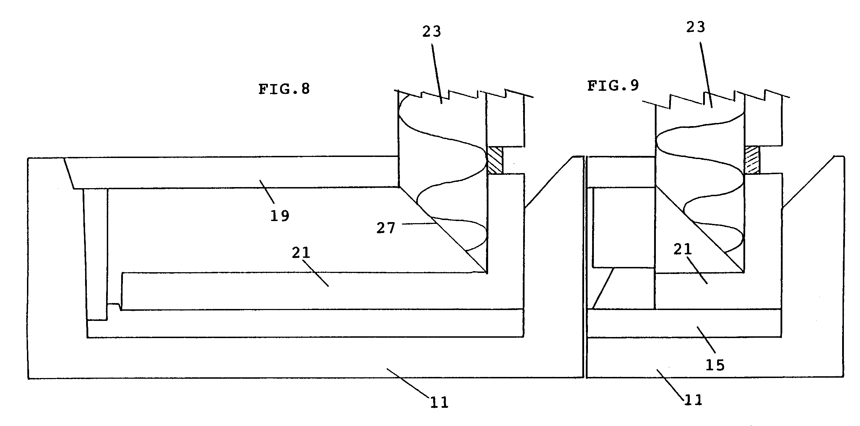

Les figures 8 et 9 représentent des variantes d'exécution du moule pour d'autres configurations d'éléments de parement d'angle selon l'invention.

### Description détaillée d'une forme d'exécution préférée de l'invention

Des repères de référence identiques sont attribués aux différents éléments constitutifs dans les différentes figures s'ils sont identiques ou exercent une fonction similaire.

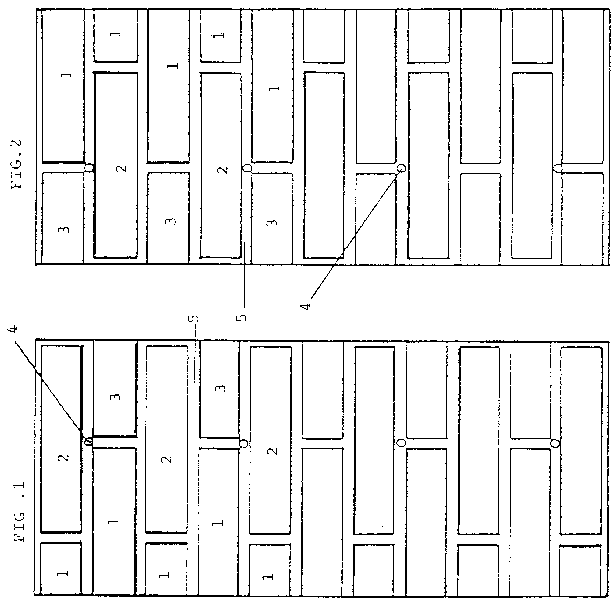

Dans les figures 1 et 2, le repère 1 correspond à l'emplacement destiné à recevoir une plaquette d'angle, le repère 2 représente l'emplacement destiné à recevoir une plaquette plane. Le repère 3 correspond à l'emplacement d'une plaquette plane ou à une protubérance dans le moule afin de laisser un vide permettant d'insérer lors de la pose sur chantier des éléments de liaison avec des panneaux adjacents.

Le repère 4 est l'indication des taquets prévus dans le moule pour former des orifices de fixation 29 des éléments de parement formés et le repère 5, l'emplacement des interstices entre les plaquettes.

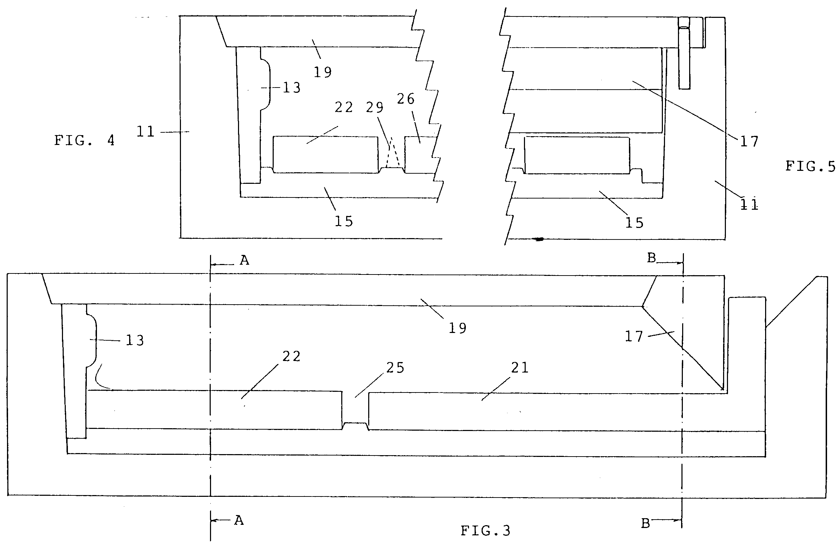

La première étape du procédé est représenté aux figures 3 à 5. Dans un moule, on place de préférence un profil d'encadrement 13 traité avec un agent démoulant, l'utilisation de ce profil n'est pas obligatoire mais il permet d'obtenir une configuration à chambre d'expansion au niveau de la jonction de plaques jointives et qui a fait l'objet de la publication EP-0 509 977 A1.

Le moule 11 comporte un fond de moule 15 rigidement lié au moule et pourvu d'un décrochement servant à maintenir le profil 13.

On pose sur ce fond avec un interstice entre les plaquettes selon la forme du moule des plaquettes d'angle 21 ou des plaquettes planes 22 ou une protubérance 26 correspondant à l'emplacement 3 du moule prévu à cet effet.

L'interstice 25 entre les plaquettes est rempli de sable (quartz) sec calibré. On remplit également les interstices entre les parties verticales des plaquettes d'angle avec du sable sec calibré.

Ce moule peut être recouvert d'un couvercle en deux parties 19 dont une partie comprend un coin ou cale 17 disposé vers la face arrière des plaquettes de la manière représentée à la figure 3.

Ce coin 17 a été recouvert préalablement d'une feuille de papier pour permettre le démoulage (décoffrage) aisé après fabrication. La résine destinée à former la mousse est ensuite appliquée dans le moule. Une feuille papier est ensuite appliquée sous la seconde partie du couvercle 19 et cette seconde partie est refermée sur le moule.

En bloquant le coin 17 comme représenté à la figure 3, une pression uniforme adéquate est appliquée par un dispositif approprié sur le couvercle pendant la phase d'expansion.

La mousse expansée occupe tout le volume 23 en formant au contact du coin 17, un biseau 27 correspondant approximativement (selon la forme du coin 17) à la bissectrice de l'angle de la plaquette 21 formant coin en équerre.

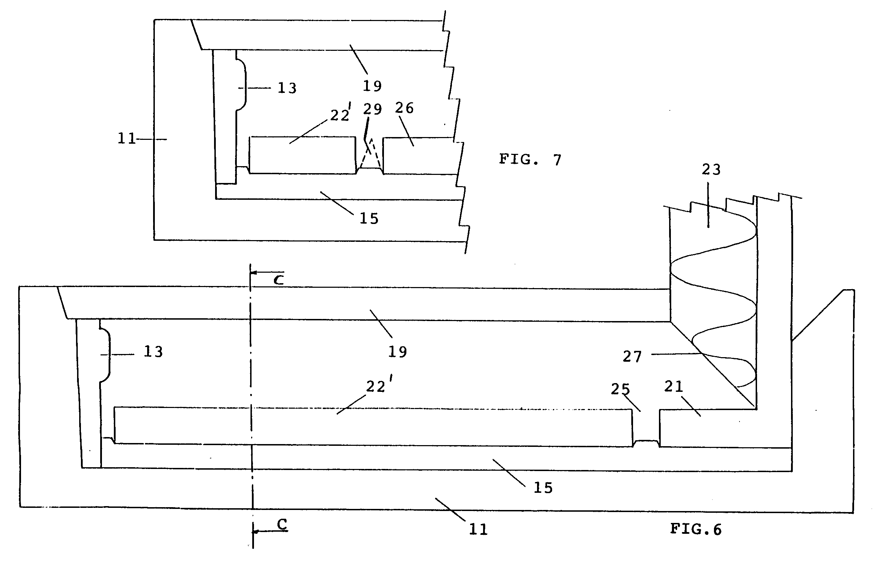

Dans la deuxième étape opératoire (figure 6 et 7), l'élément de l'angle qui a été formé dans l'étape précédente, après avoir été prélevé du premier moule est introduit dans un deuxième moule. Ce deuxième moule est représenté par convention à cause de la similitude des fonctions par le repère 11. En plus de la plaquette d'angle 21, on dispose sur le fond du moule 15 une plaque plane 22'.

De manière identique à la première étape opératoire du procédé selon l'invention, on peut disposer un profil d'encadrement 13 afin d'obtenir la configuration d'une chambre d'expansion à l'extrémité de la plaque.

Dans cette étape-ci, le coin 17 n'est plus nécessaire car la mousse formée dans la première étape forme le biseau.

Le fond du moule utilisé dans la deuxième étape doit bien entendu être choisi en fonction du fond du moule de la première étape pour assurer une configuration du type boutisse-carreau.

On répète en principe les opérations décrites dans la première étape susdécrite, à savoir:
L'interstice 25 entre les plaquettes 21, 22' est rempli de sable (quartz) sec calibré.

On remplit également les interstices entre les parties verticales des plaquettes d'angle avec du sable sec calibré.

La résine destinée à former la mousse est ensuite appliquée dans le moule, une feuille de papier est appliquée sur le couvercle 19 et celui-ci est refermé.

Une pression uniforme adéquate est appliquée par un dispositif approprié sur le couvercle pendant la phase d'expansion. La mousse expansée occupe tout le volume 23 en formant un contact avec le volume déjà expansé en biseau, correspondant approximativement (selon la forme du coin 17 utilisé dans l'étape précédente) à la bissectrice de l'angle de la pièce 21 en équerre et formant l'angle de l'élément de parement.

L'élément de parement d'angle est ensuite retiré de son moule et est prêt pour la pose sur un chantier.

## Revendications

1. Procédé pour la fabrication d'éléments de parement d'angle comportant des plaquettes (21) d'angle, des plaquettes (22, 22') planes et/ou des vides aux dimensions des plaquettes afin de permettre la liaison avec des panneaux adjacents lors de la pose sur un chantier, lesdites plaquettes étant disposées dans un support moussé (23) avec des espaces (25) correspondant à des joints ordinaires constitués de sable lié par la matière du support moussé, caractérisé en ce que ledit support moussé (23) est formé en deux étapes opératoires successives.

2. Procédé selon la revendication 1 caractérisé en ce qu'on réalise deux étapes opératoires successives dans lesquelles:
- on place dans une première étape, au fond d'un moule essentiellement plan, les plaquettes (21, 22) et/ou des protubérances afin de former des vides aux dimensions des plaquettes,
- on remplit les interstices (25) entre les plaquettes (21, 22) et/ou les protubérances de sable sec calibré,
- on recouvre le moule d'une première partie d'un couvercle (19) comportant un coin ou une cale (17),
- on injecte de la mousse dans le moule,
- on recouvre le moule par la deuxième partie du couvercle, ce couvercle étant disposé vers la face arrière des plaquettes (21, 22) de manière à permettre l'expansion de la mousse sur la face arrière desdites plaquettes (21,22) et/ou des protubérances, en formant à l'aide du coin ou de la cale, un biseau (27) essentiellement selon la bissectrice des plaquettes d'angle (21),
- on démoule l'élément formé,
- on place ensuite au fond d'un second moule, après l'avoir fait pivoter de 90°, l'élément ainsi formé ainsi que des plaques planes (22') et/ou des protubérances,
- on remplit les interstices entre les plaquettes (21, 22') et/ou les protubérances de sable sec calibré,
- on injecte de la mousse dans le moule,
- on recouvre le moule d'un couvercle (19), de manière à permettre l'expansion de la mousse sur la face arrière des plaquettes (21, 22') et/ou des protubérances jusqu'au biseau (27) formé,
- on démoule l'élément de parement d'angle ainsi formé.

3. Procédé selon la revendication 1 caractérisé en ce qu'on réalise deux étapes opératoires successives dans lesquelles:
- on place dans une première étape, au fond d'un moule essentiellement plan, les plaquettes (21, 22) et/ou des protubérances afin de former des vides aux dimensions des plaquettes,
- on remplit les interstices (25) entre les plaquettes (21, 22) et/ou les protubérances de sable sec calibré,
- on recouvre le moule d'un couvercle comportant un coin ou une cale, ce couvercle étant disposé vers la face arrière des plaquettes (21, 22) de manière à permettre l'expansion de la mousse sur la face arrière desdites plaquettes (21, 22) et/ou des protubérances, en formant à l'aide du coin ou de la cale, un biseau (27) essentiellement selon la bissectrice des plaquettes d'angle (21),
- on injecte de la mousse par un orifice d'injection pratiqué dans la paroi dudit moule,
- on démoule l'élément formé,
- on place ensuite au fond d'un second moule, après l'avoir fait pivoter de 90°, l'élément ainsi formé ainsi que des plaques planes (22') et/ou des protubérances,
- on remplit les interstices entre les plaquettes (21, 22') et/ou les protubérances de sable sec calibré,
- on recouvre le moule d'un couvercle (19),
- on injecte de la mousse dans le moule par un orifice pratiqué dans la paroi dudit moule, de manière à permettre l'expansion de la mousse sur la face arrière des plaquettes (21, 22') et/ou des protubérances jusqu'au biseau (27) formé,
- on démoule l'élément de parement d'angle ainsi formé.

4. Dispositif destiné à la mise en oeuvre du procédé de fabrication des éléments de parement d'angle selon l'une quelconque des revendications 1 à 3 comprenant au moins un moule essentiellement plan destiné à recevoir des plaquettes (21, 22) et/ou des protubérances afin de former des vides aux dimensions des plaquettes ainsi que la mousse destinée à réaliser le support moussé des éléments d'angle, ce moule étant muni d'un couvercle (19), caractérisé en ce que le couvercle, de préférence en deux parties, comporte un coin ou une cale (17).

5. Dispositif selon la revendication 4 caractérisé en ce qu'il comprend un second moule également essentiellement plan qui est destiné à recevoir l'élément déjà réalisé dans le premier moule et qui comporte également un couvercle.

6. Dispositif selon la revendication 4 ou 5 caractérisé en ce que le moule comporte des taquets.

7. Dispositif selon l'une quelconque des revendications 4 à 6 caractérisé en ce que le moule comporte un orifice d'injection de mousse.

8. Elément de parement d'angle comportant des plaquettes (21, 22, 22') et/ou des vides aux dimensions des plaquettes dans un support moussé (23) avec des éléments avec des espaces (25) correspondant à des joints ordinaires constitués de sable lié par la matière du support moussé, caractérisé en ce que le support moussé (23) comporte un biseau (27) correspondant à la bissectrice de l'angle de la plaquette (21) formant le coin d'angle de l'élément de parement.

9. Elément de parement selon la revendication 8 caractérisé en ce qu'il comporte des orifices de fixation (29).

## Claims

1. Process for manufacturing angle facing elements comprising angle plates (21), flat plates (22, 22') and/or cavities according to the plate sizes so as to allow the binding with adjacent panels upon laying out on a site, said plates being arranged in a foamed support (23) with gaps (25) corresponding to ordinary joints formed with sand binded with the foamed support material, characterized in that said foamed support (23) is formed in two successive operating steps.

2. Process according to claim 1, characterized in that two successive operating steps are carried out, in which :
- in a first step, the plates (21, 22) and/or protuberances are arranged in the bottom of an essentially flat mould so as to form cavities according to the plate sizes,
- the gaps (25) between the plates (21, 22) and/or the protuberances are filled with dry sized sand,
- the mould is covered with a first part of a lid (19) comprising a wedge (17),
- foam is injected into the mould,
- the mold is covered with the second part of the lid, said lid being arranged toward the rear side of the plates (21, 22) so as to allow foam expansion on the rear side of said plates (21, 22) et protuberances, forming thereby with the wedge a bevel (27) substantially according to the bisecting line of the angle plates (21),
- the resulting element is stripped out from the mould,
- the resulting element together with flat plates (22') and/or protuberances is then arranged in the bottom of a second mould after a rotation by 90°,
- the gaps between the plates (21, 22') and/or the protuberances are filled with dry sized sand,
- foam is injected into the mould,
- the mould is covered with a lid (19) so as to allow foam expansion on the rear side of the plates (21, 22') and/or protuberances up to the formed bevel (27), and
- the so obtained angle facing element is stripped out from the mould.

3. Process according to claim 1, characterized in that two successive operating steps are carried out, in which :
- in a first step, the plates (21, 22) and/or protuberances are arranged in the bottom of an essentially flat mould so as to form cavities according to the plate sizes,
- the gaps (25) between the plates (21, 22) and/or the protuberances are filled with dry sized sand,
- the mould is covered with a lid comprising a wedge, said lid being arranged toward the rear side of the plates (21, 22) so as to allow foam expansion on the rear side of said plates (21, 22) and/or protuberances, forming thereby with the wedge a bevel (27) substantially according to the bisecting line of the angle plates (21),
- foam is injected through an injection orifice arranged in the wall of said mould,
- the resulting element is stripped out from the mould,
- the resulting element together with flat plates (22') and/or protuberances is then arranged in the bottom of a second mould after a rotation by 90°,
- the gaps between the plates (21, 22') and/or the protuberances are filled with dry sized sand,
- the mould is covered with a lid (19),
- foam is injected into the mould through an orifice arranged in the wall of said mould so as to allow foam expansion on the rear side of the plates (21, 22') and/or protuberances up to the formed bevel (27), and
- the so obtained angle facing element is stripped out from the mould.

4. Device used for implementing the process for manufacturing angle facing elements according to any of claims 1 to 3, comprising at least one substantially flat mould arranged to receive plates (21, 22) and/or protuberances so as to form cavities according to the plate sizes as well as the foam used to make the foamed support of the angle elements, said mould being provided with a lid (19), characterized in that the lid, preferably formed with two parts, comprises a wedge (17).

5. Device according to claim 4, characterized in that it comprises a second substantially flat moold which is arranged to receive the element already formed in the first mould and also comprises a lid.

6. Device according to claim 4 or 5, characterized in that the mould comprises lugs.

7. Device according to any of claims 4 to 6, characterized in that the mould comprises a foam injecting orifice.

8. Angle facing element comprising plates (21, 22, 23') and/or cavities according to the plate sizes in a foamed support (23) with elements with gaps (25) corresponding to ordinary joints formed with sand binded by the foamed support material, characterized in that the foamed support (23) comprises a bevel (27) corresponding to the bisecting line of the angle of the corner angle forming plate (21) of the facing element.

9. Facing element according to claim 8, characterized in that it comprises securing orifices (29).

## Patentansprüche

1. Verfahren zur Herstellung von Winkel-Verblendelementen, umfassend Winkelplättchen (21), sowie ebene Plättchen (22, 22'), und/oder Hohlräume mit den Abmessungen der Plättchen, um bei der Anbringung auf einer Baustelle die Verbindung mit angrenzenden Platten zu ermöglichen, wobei die Plättchen in einer geschäumten Unterlage (23) angeordnet sind, mit Zwischenräumen (25), die normalen Fugen entsprechen, die aus Sand bestehen, der durch das Material der geschäumten Unterlage gebunden ist, dadurch gekennzeichnet, daß die geschäumte Unterlage (23) in zwei aufeinanderfolgenden Verfahrensschritten gebildet wird.

2. Verfahren gemäß Anspruch 1, dadurch gekennzeichnet, daß zwei aufeinanderfolgende Verfahrensschritte ausgeführt werden, bei denen:
- man bei einem ersten Schritt auf dem Boden einer im wesentlichen ebenen Form die Plättchen (21, 22) anordnet, und/oder Ausbauchungen anordnet, um Hohlräume mit den Abmessungen der Plättchen zu bilden,
- man die Zwischenräume (25) zwischen den Plättchen (21, 22) und/oder den Ausbauchungen mit kalibriertem, trockenem Sand füllt,
- man die Form mit einem ersten Teil eines Deckels (19) bedeckt, der einen Keil (17) umfaßt,
- man Schaum in die Form einspritzt,
- man die Form mit dem zweiten Teil des Deckels bedeckt, wobei dieser Deckel über der Rückseite der Plättchen (21, 22) so angeordnet wird, daß die Expansion des Schaums auf der Rückseite der Plättchen (21, 22) und/oder der Ausbauchungen ermöglicht wird, wobei mit Hilfe des Keils eine schräge Kante gebildet wird, die im wesentlichen der Winkelhalbierenden der Winkelplättchen (21) entspricht,
- man das gebildete Element aus der Form herausnimmt,
- man danach das so geformte Element, nachdem man es um 90° gedreht hat, sowie ebene Platten (22') und/oder Ausbauchungen auf dem Boden einer zweiten Form anordnet,
- man die Zwischenräume zwischen den Plättchen (21, 22') und/oder den Ausbauchungen mit kalibriertem, trockenem Sand füllt,
- man Schaum in die Form einspritzt,
- man die Form so mit einem Deckel (19) bedeckt, daß die Expansion des Schaums auf der Rückseite der Plättchen (21, 22') und/oder der Ausbauchungen bis zu der gebildeten schrägen Kante (27) ermöglicht wird,
- man das so gebildete Winkel-Verblendelement aus der Form herausnimmt.

3. Verfahren gemäß Anspruch 1, dadurch gekennzeichnet, daß zwei aufeinanderfolgende Verfahrensschritte ausgeführt werden, bei denen:
- man bei einem ersten Schritt auf dem Boden einer im wesentlichen ebenen Form die Plättchen (21, 22) anordnet, und/oder Ausbauchungen anordnet, um Hohlräume mit den Abmessungen der Plättchen zu bilden,
- man die Zwischenräume (25) zwischen den Plättchen (21, 22) und/oder den Ausbauchungen mit kalibriertem, trockenem Sand füllt,
- man die Form mit einem Deckels bedeckt, der einen Keil umfaßt, wobei dieser Deckel über der Rückseite der Plättchen (21, 22) so angeordnet ist, daß die Expansion des Schaums auf der Rückseite der Plättchen (21, 22) und/oder der Ausbauchungen ermöglicht wird, wobei mit Hilfe des Keils eine schräge Kante (27) gebildet wird, die im wesentlichen der Winkelhalbierenden der Winkelplättchen (21) entspricht,
- man über eine in der Wand der Form angebrachte Einspritzöffnung Schaum einspritzt,
- man das gebildete Element aus der Form herausnimmt,
- man danach das so geformte Element, nachdem man es um 90° gedreht hat, sowie ebene Platten (22') und/oder Ausbauchungen auf dem Boden einer zweiten Form anordnet,
- man die Zwischenräume zwischen den Plättchen (21, 22') und/oder den Ausbauchungen mit kalibriertem, trockenem Sand füllt,
- man die Form mit einem Deckel (19) bedeckt,
- man über eine in der Wand der Form angebrachte Öffnung Schaum in die Form so einspritzt, daß die Expansion des Schaums auf der Rückseite der Plättchen (21, 22') und/oder der Ausbauchungen bis zu der gebildeten schrägen Kante (27) ermöglicht wird,
- man das so gebildete Winkel-Verblendelement aus der Form herausnimmt.

4. Vorrichtung zur Verwirklichung des Verfahrens zur Herstellung der Winkel-Verblendelemente gemäß irgendeinem der Ansprüche 1 bis 3, die mindestens eine im wesentlichen ebene Form aufweist, die dazu bestimmt ist, Plättchen (21, 22) aufzunehmen, und/oder Ausbauchungen aufzunehmen, um Hohlräume mit den Abmessungen der Plättchen zu bilden, sowie Schaum aufzunehmen, der dazu bestimmt ist, die geschäumte Unterlage der Winkelelemente zu verwirklichen, wobei diese Form mit einem Deckel (19) versehen ist, dadurch gekennzeichnet, daß der vorzugsweise aus zwei Teilen bestehende Deckel einen Keil (17) umfaßt.

5. Vorrichtung gemäß Anspruch 4, dadurch gekennzeichnet, daß sie eine zweite, ebenfalls im wesentlichen ebene Form aufweist, die dazu bestimmt ist, das bereits in der ersten Form verwirklichte Element aufzunehmen, und die ebenfalls einen Deckel umfaßt.

6. Vorrichtung gemäß Anspruch 4 oder 5, dadurch gekennzeichnet, daß die Form Nasen umfaßt.

7. Vorrichtung gemäß irgendeinem der Ansprüche 4 bis 6, dadurch gekennzeichnet, daß die Form eine Öffnung zum Einspritzen von Schaum umfaßt.

8. Winkel-Verblendelement, das Plättchen (21, 22, 22') und/oder Hohlräume mit den Abmessungen der Plättchen in einer geschäumten Unterlage (23) umfaßt, mit Zwischenräumen (25), die normalen Fugen entsprechen, die aus Sand bestehen, der durch das Material der geschäumten Unterlage gebunden ist, dadurch gekennzeichnet, daß die geschäumte Unterlage (23) eine schräge Kante (27) umfaßt, die der Winkelhalbierenden des Winkels des Plättchens (21) entspricht, der die Ecke des Verblendelements bildet.

9. Verblendelement gemäß Anspruch 8, dadurch gekennzeichnet, daß es Befestigungsöffnungen (29) umfaßt.
